# EUROPÄISCHE PATENTSCHRIFT

(11) **EP 1 860 081 B1**
(45) Veröffentlichungstag und Bekanntmachung des Hinweises auf die Patenterteilung: **02.02.2011**
(21) Anmeldenummer: 07003284.2
(22) Anmeldetag: 16.02.2007
(51) Int. Cl.: C04B 35/573, C04B 35/80, F16D 69/02, F16D 65/12

(54) **Verfahren zur Herstellung von keramischen Werkstoffen auf Basis von Siliciumcarbid**
Method for producing ceramic substances based on silicon carbide
Procédé de fabrication de matières premières céramiques à base de carbure de silicium

(30) Priorität: 19.05.2006 DE 102006023561
(43) Veröffentlichungstag der Anmeldung: 28.11.2007
(73) Patentinhaber: AUDI AG, 85045 Ingolstadt (DE)
(72) Erfinder: Kienzle, Andreas, 86753 Balgheim (DE); Daimer, Johann, 64546 Mörfelden-Walldorf (DE)
(74) Vertreter: Asch, Konrad

(56) Entgegenhaltungen:
- EP-A1- 0 277 085
- EP-A1- 0 378 499
- EP-A2- 0 864 548
- DE-U1- 9 422 476

## Beschreibung

Die Erfindung betrifft ein Verfahren zur Herstellung von keramischen Werkstoffen auf Basis von Siliciumcarbid.

Keramische Werkstoffe auf Basis von Siliciumcarbid werden beispielsweise durch Reaktion von flüssigem Silicium mit Kohlenstoff hergestellt. Dabei ist es bevorzugt, poröse Formkörper aus Kohlenstoff (Vorkörper) einzusetzen, deren Gestalt ungefähr der des herzustellenden Formkörpers aus dem keramischen Werkstoff entspricht, in dem sogenannten "near net shape-Verfahren". Bevorzugt werden dabei solche Vorkörper eingesetzt, die mit Fasern bevorzugt aus Kohlenstoff verstärkt sind. Diese bleiben bei der Reaktion des Silicium mit dem Kohlenstoff der Matrix des Vorkörpers im wesentlichen erhalten und können daher ihre verstärkenden Wirkung weiter ausüben. Aus dem Stand der Technik sind Ausführungsformen bekannt, die diesen Erhalt der Verstärkungsfasern durch eine spezielle Beschichtung sicherstellen (DE 197 10 105 A1).

Aus der Patentanmeldung EP 0 277 085 A1 ist bekannt, Artikel aus Metallcarbiden herzustellen, wobei in einem Tiegel in einer im wesentlichen inerten Atmosphäre ein Körper aus einem geschmolzenen Metall aus der Gruppe umfassend Titan, Zirkon und Hafnium in Kontakt gebracht wird mit einer permeablen Masse enthaltend einen Füllstoff und eine Kohlenstoff-Quelle, wobei der Kohlenstoff höchstens in stöchiometrisch erforderlicher Menge zugegen sein darf, und der Oberflächenkontakt so lange bestehen bleibt, bis das geschmolzene Metall in die permeable Masse infiltriert ist und durch Reaktion mit der Kohlenstoff-Quelle ein Carbid entstanden ist, und die Infiltration und Reaktion genügend lange fortgesetzt wird, bis die Reaktion im wesentlichen abgeschlossen ist. Die Form des Körpers wird dabei durch den Tiegel und die Gestalt des Metallstabs bestimmt, der in das aus Kohlenstoff-Pulver und Carbidpulver bestehenden Füllstoff-Bett eingesetzt wird.

Aus der Patentanmeldung EP 0 378 499 ist das Infiltrieren einer aus Borcarbid, einem sogenannten Spendermaterial, das ein Bor-Spender oder ein Kohlenstoff-Spender sein kann, und einem organischen Bindemittel bereiteten Vorform mit einem Metall bekannt, wobei ein Körper entsteht enthaltend mindestens eine Verbindung aus Bor und dem Metall. Die Infiltration mit dem Metall wird in einem hochtemperaturbeständigen Tiegel durchgeführt. Die Reaktion des flüssigen Silicium mit dem Vorkörper wird üblicherweise so durchgeführt, dass das Silicium gemeinsam mit dem Vorkörper bis zum Schmelzen erhitzt wird, das Silicium in den Vorkörper fließt, durch Kapillarwirkung auf- und absteigend, durch Eintauchen, oder durch Ausfließen aus aufgelegten Silicium-Partikeln oder-Körpern, die auch geeignet gebunden sein können.

Ein grundsätzliches Problem dabei ist in einem Chargenbetrieb das Aufheizen und Abkühlen der Werkstücke (Vorkörper und silicierter Formkörper) bis zur Schmelztemperatur des Siliciums bei ca. 1420°C und das nachfolgende Abkühlen auf Raumtemperatur zum Nachbearbeiten und Weiterverarbeiten. Beim Zuführen von flüssigem Silicium über Dochte in den Vorkörper hat die begrenzte Dochtauflagefläche ein langsames Eindringen des flüssigen Silicium und daher eine lange Reaktionszeit zur Folge. Während der langen Reaktionszeit werden selbstverständlich auch unerwünschte Nebenreaktionen begünstigt, insbesondere der Angriff des flüssigen Silicium auf die Verstärkungsfasern aus Kohlenstoff. Weiter ist es erforderlich, Silicium in einer größeren Menge in den Schmelzgefäßen vorzuhalten, als tatsächlich zur Infiltration und Reaktion benötigt wird. Die Schmelzgefäße (Tiegel) müssen gegen flüssiges Silicium über lange Zeit beständig sein, die erforderliche Schutzbeschichtung (beispielsweise mit Bornitrid oder durch Auskleiden mit Graphitfolie, die ihrerseits mit Bornitrid beschichtet ist) ist aufwendig und daher teuer. Auch die Reinigung der Tiegel nach Gebrauch und vor Wiedereinsatz von den bei langer Verweilzeit gebildeten Nebenprodukten und Abfallstoffen ist aufwendig.

Es besteht daher das Bedürfnis nach einem Verfahren zur Herstellung von keramischen Werkstoffen auf Basis von Siliciumcarbid, bei dem das Einbringen des erforderlichen Siliciums einfacher und mit geringerem Aufwand möglich ist.

Die Erfindung stellt ein Verfahren zur Verfügung, bei dem mit Fasern verstärkte poröse Körper aus Kohlenstoff auf einer gegenüber flüssigem Silicium inerten Unterlage angeordnet werden, wobei die Körper von außen zugängliche Hohlräume oder oberflächliche Ausnehmungen beispielsweise in konkaver Gestalt aufweisen. Dabei ist es erfindungswesentlich, daß die Hohlräume in den porösen Körpern nach unten hin verschlossen sind oder mit der Unterlage einen solchen nach unten hin abgeschlossenen Raum bilden, der im weiteren gemeinsam mit den oberflächlichen Ausnehmungen als Reservoir bezeichnet wird, und daß dieses Reservoir oder eine für die Bildung des keramischen Werkstoffs durch Reaktion des Kohlenstoff mit dem Silicium ausreichende Menge an Silicium fassen kann. Es ist erfindungsgemäß jedoch auch möglich, das beschriebene Verfahren in mehreren Stufen durchzuführen, wobei nach der Reaktion der ersten "Füllung", also der ersten Menge an Silicium, das Reservoir zumindest ein weiteres Mal mit Silicium befüllt wird, und die Reaktion fortgeführt wird.

Die Anordnung wird erwärmt zum Aufschmelzen des im Reservoir befindlichen Silicium durch Eintrag von Energie. Das geschmolzene Silicium dringt in die porösen Körper ein, dieser Vorgang wird als Infiltrieren bezeichnet, und reagiert mit dem Kohlenstoff in den porösen Körpern zu Siliciumcarbid. Die Erwärmung der Anordnung erfolgt vorteilhaft durch induktive Aufheizung oder durch Strahlungsheizung.

Beim Schmelzen des Silicium in dem Reservoir dringt das geschmolzene Silicium über die gesamte Kontaktfläche in den porösen Körper ein; dies führt zu wesentlich geringeren Reaktionszeiten.

Die Unterlage der Anordnung besteht bevorzugt aus Graphit oder einer Graphitfolie. Dabei kann als Trennmittel eine Schicht auf dem Graphit oder der Graphitfolie vorgesehen werden, bevorzugt ist Bornitrid als Trennmittel.

Es hat sich bei den dieser Erfindung zugrundeliegenden Untersuchungen ergeben, daß durch die geringere Reaktionszeit der Angriff des flüssigen Silicium auf die Verstärkungsfasern aus Kohlenstoff erheblich verringert oder ganz unterbunden werden kann, so daß ein spezieller Faserschutz durch Beschichtung verringert werden oder ganz entfallen kann. Neben der größeren Kontaktfläche und dem dadurch bewirkten schnelleren Eindringen des Silicium in den Kohlenstoffkörper wird die Verringerung des Angriffs auf die Fasern gemäß den Untersuchungen auch durch die kürzere Aufheizzeit bewirkt.

Es ist daher für die Erfindung wesentlich, daß das Silicium nicht etwa durch eine oberflächliche Beschichtung von Partikeln oder eines kompakten Stücks nach dem Schmelzen zurückgehalten wird und nur verzögert in den Kohlenstoffkörper eindringen kann, wie beschrieben in der Anmeldung DE 198 50 468 A1; vielmehr ist es erwünscht, daß das aufgeschmolzene Silicium möglichst rasch in den Kohlenstoffkörper eindringen kann.

Bei der Herstellung von Bremsscheibenringen aus keramischen Werkstoffen auf Basis von Siliciumcarbid kann der Zylinderring selbst in Verbindung mit der Unterlage als Reservoir wirken. Eine mögliche Kontamination durch ein Trennmittel, das als Schicht auf der Unterlage eingesetzt wird, an den Oberflächen der Bremsscheibenringe, die als Reibfläche wirken, kann vermieden werden, wenn Bremsscheibenringe mit angeformtem Topf aus demselben oder einem ähnlichen keramischen Werkstoff verwendet werden. In diesem Fall kann der Topf als Reservoir dienen, die Art der Auflage der Bremsscheibe mit der Unterseite des Topfes auf der Unterlage stellt sicher, daß die später als Reibflächen wirkenden Teile der Bremsscheibe nicht in Kontakt kommen mit der Unterlage und daher mit der darauf befindlichen Trennmittelschicht, bevorzugt eine Bornitridschicht. Der angeformte Topf dient bevorzugt zur Befestigung der Bremsscheibe an der Nabe des Fahrzeugs. Der poröse Körper aus Kohlenstoff hat in diesem Fall die Gestalt einer Mantelschicht eines Kegelstumpfs mit einer an die Außenseite der Basis angesetzten zylinderringförmigen Scheibe und einer Deckscheibe an dem oberen stumpfen Ende des Kegelstumpfs, wobei die Deckscheibe bevorzugt eine mittige Ausnehmung in Form eines Hohlzylinders hat.

Die so aus den keramischen Werkstoffen hergestellten Körper werden bevorzugt verwendet als Reibscheiben, insbesondere für Bremsscheiben und Kupplungsmitnehmerscheiben.

Das Verfahren kann als kontinuierliches Verfahren ausgeführt werden, wobei insbesondere die geringe thermische Trägheit durch die Limitierung der aufzuheizenden und abzukühlenden Massen die Steuerbarkeit des Verfahrens günstig beeinflußt. Es ist jedoch auch möglich, dieses Silicierungsverfahren auch als Losverfahren ("batch") zu betreiben.

### Das Verfahren wird durch die beiliegenden Zeichnungen erläutert. Dabei zeigt die

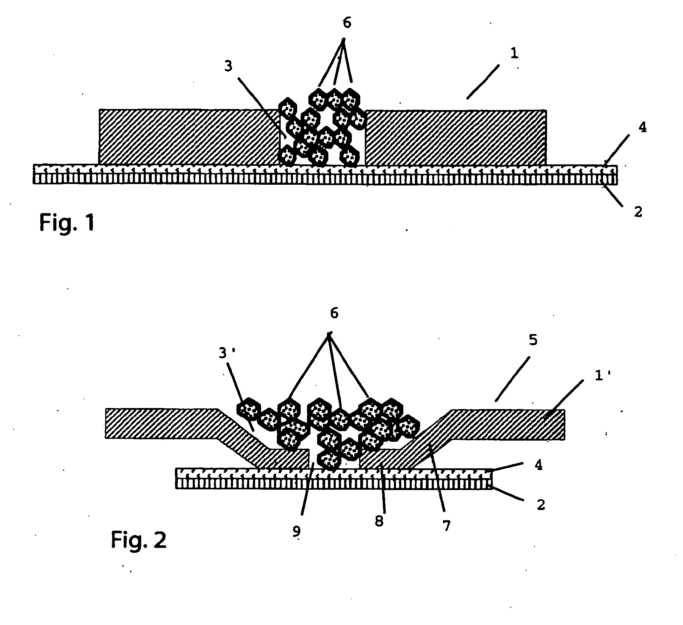

- Fig. 1: einen Querschnitt durch einen zylinderringförmigen porösen Kohlenstoffkörper **1,** der im Kontakt mit einer Unterlage **2,** die mit einer Schicht **4** aus Bornitrid versehen ist, ein Reservoir **3** bildet, in dem eine zur Reaktion ausreichende Menge an Silicium in Form von Partikeln **6** oder einem kompakten Körper enthalten ist, und
- Fig. 2: einen Querschnitt durch einen porösen Vorkörper **5** aus Kohlenstoff für eine Carbon-Keramik-Bremsscheibe mit einem angeformten Topfteil **5'** auf einer Unterlage **2** wie in Fig. 1, wobei in dem aus dem Topfteil gebildeten Reservoir **3** ebenfalls Si-Partikel **6** enthalten sind.

Die Aufnahme des Silicium in den dargestellten Ausführungsformen erfolgt über die gesamte innere Mantelfläche des Zylinderringes (Fig. 1), bzw. über die Innenfläche des in Fig. 2 dargestellten beckenförmigen Reservoirs.

Das Erwärmen der in Fig. 1 dargestellten Anordnung wird bevorzugt durch Energieeintrag in der Unterlage **2** oder besonders bevorzugt in dem porösen Kohlenstoffkörper **1** selbst bewirkt, dies kann beispielsweise durch Induktion von Wirbelströmen oder durch Strahlung erfolgen.

Dabei schmilzt in dem aus dem Hohlraum in Kontakt mit der Unterlage **2** gebildete Reservoir **3** das Silicium in der Schüttung der Partikel **6** und dringt in den porösen Kohlenstoffkörper **1** durch die innere Mantelfläche des Zylinderrings ein. Der Kohlenstoff in dem Körper **1** reagiert mit dem eingedrungenen Silicium unter Bildung von Siliciumcarbid. Die Beschichtung der Unterlage **2** mit einer Schicht **4** aus Bornitrid bewirkt dabei, daß nach der Abkühlung der durch Reaktion zu Siliciumcarbid keramisierte Körper leicht von der Unterlage **2** abgelöst werden kann.

In gleicher Weise wird die in Fig. 2 dargestellte Anordnung erwärmt, wobei hier ein poröser Körper aus Kohlenstoff **5** verwendet wird, der mittig einen angeformten Topf in Form der Mantelfläche **7** und der Deckfläche **8** eines Kegelstumpfs aufweist. In der Deckfläche **8** ist mittig eine Ausnehmung **9** mit kreisförmigem Querschnitt, die einen Hohlzylinder bildet. Das in dem in Form einer nach oben offenen Ausnehmung gebildete Reservoir **3** befindliche Silicium kann in dieser Ausführungsform über eine im Vergleich zu Fig. 1 größere Fläche in den Körper **5** nach dem Aufschmelzen eindringen. Der Teil **1'** des Körpers, entsprechend dem der Reibung beim Bremsen ausgesetzten Bremsscheibenbereich, kann hier nicht mit dem Bornitrid der Schicht **4** in Kontakt kommen; das Vermeiden einer Kontaminierung mit Bornitrid ist für die Reibschicht einer Bremsscheibe erwünscht.

### Der Effekt wird durch die nachfolgenden Beispiele verdeutlicht:

### Beispiel 1 Formkörper mit dreifachem Faserschutz

Ein Prepreg (imprägniertes Gewebe) wurde aus einem Gewebe von Kohlenstoff-Multifilamenten (3 K Rovings, also 3000 Einzelfilamente, aus Kohlenstoff mit einer flächenbezogenen Masse von ca. 240 g/m²) durch Imprägnieren mit einem wäßrigen Resol hergestellt. Überschüssiges Phenolharz wurde durch Abpressen entfernt. Das Gewebe wurde in flächenhafte Gebilde von ca. 500 mm Durchmesser zerschnitten, und diese wurden mit Zwischenlagen von silikonisiertem Papier bei ca. 140 °C in einer Presse unter einem Druck von ca. 5 MPa drei Stunden lang gehärtet.

Die gepreßten und ausgehärteten Stapel von imprägnierten Geweben wurden anschließend in einem Ofen unter Stickstoff als Schutzgas bei einer Temperatur bis zu 900 °C carbonisiert. Dabei wurde mit einer Rate von ca. 4 K/h von 300 °C bis 600 °C aufgeheizt, um eine gleichmäßige Carbonisierung zu erreichen. Nach Abkühlen ebenfalls unter Schutzgas wurden die carbonisierten Gewebeplatten erneut mit einem Phenolharz (Novolak, ®Bakelite IT 491) imprägniert, getrocknet und ca. acht Stunden bei 950 °C wiederum unter Schutzgas carbonisiert. Nach Abkühlen auf Raumtemperatur wurde abermals imprägniert, diesmal mit einem Teerpech mit einer Erweichungstemperatur von ca. 60 °C gemäß DIN 52025. Die imprägnierten Gewebeplatten wurden erneut carbonisiert, wieder bei ca. 950 °C während acht Stunden. Anschließend wurden die Platten unter Schutzgas auf 2200 °C erhitzt und zwanzig Minuten bei dieser Temperatur belassen, nach Abkühlen in einer Schlagmessermühle mit einem Siebeinsatz mit 5 mm gemahlen.

Das gemahlene Material (2750 g) wurde anschließend mit einer Mischung aus 1500 g eines Phenolharzes (Resol, ®Norsophen 1203, Fa. Bakelite) und 450 g eines gemahlenen (Teilchengröße maximal 20 µm) Steinkohlenteerpechs mit einer Erweichungstemperatur von 230 °C gemäß DIN 52025 bei Zimmertemperatur (23 °C) in einem Z-Arm-Kneter gemischt. Die homogenisierte Mischung wurde in einer Form in einer heizbaren Presse bei 1,5 MPa (15 bar) und einer Temperatur von 150 °C während zwei Stunden vollständig ausgehärtet. Der gehärtete Formkörper wurde entnommen und wie oben bei 900 °C carbonisiert.

### Beispiel 2 Formkörper mit einfachem Faserschutz

Ein Prepreg (imprägniertes Gewebe) wurde aus einem Gewebe von Kohlenstoff-Multifilamenten (3 K Rovings, also 3000 Einzelfilamente, aus Kohlenstoff mit einer flächenbezogenen Masse von ca. 240 g/m²) durch Imprägnieren mit einem wäßrigen Resol hergestellt. Überschüssiges Phenolharz wurde durch Abpressen entfernt. Das Gewebe wurde in flächenhafte Gebilde von ca. 500 mm Durchmesser zerschnitten, und diese wurden mit Zwischenlagen von silikonisiertem Papier bei ca. 140 °C in einer Presse unter einem Druck von ca. 5 MPa drei Stunden lang gehärtet. Das gehärtete Material wurde in einer Schlagmessermühle mit einem Siebeinsatz mit 5 mm gemahlen.

Das gemahlene Material (2750 g) wurde anschließend mit einer Mischung aus 1500 g eines Phenolharzes (Resol, ®Norsophen 1203, Fa. Bakelite) und 450 g eines gemahlenen (Teilchengröße maximal 20 µm) Steinkohlenteerpechs mit einer Erweichungstemperatur von 230 °C gemäß DIN 52025 bei Zimmertemperatur (23 °C) in einem Z-Arm-Kneter gemischt. Die homogenisierte Mischung wurde in einer Form in einer heizbaren Presse bei 1,5 MPa (15 bar) und einer Temperatur von 150 °C während zwei Stunden vollständig ausgehärtet. Der gehärtete Formkörper wurde entnommen und wie oben bei 900 °C carbonisiert.

### Beispiel 3 Silicieren der Formkörper

Jeweils 3 Formkörper in Gestalt von Zylinderringscheiben mit einer Höhe von 36 mm, einem Innendurchmesser von 155 mm und einem Außendurchmesser von 380 mm, die gemäß den Beispielen 1 und 2 hergestellt worden waren, wurden
a) nach der herkömmlichen Weise (Silicieren durch Aufsetzen des Formkörpers auf Dochte aus porösem Kohlenstoffmaterial, die in Kontakt mit einem Bad aus flüssigem Silicium stehen, Aufheizgeschwindigkeit 10 K/min, Haltezeit 30 min, Temperatur ca. 1600 °C, Vakuum) und
b) gemäß der Erfindung, indem auf quadratische Graphitplatten mit einer Kantenlänge von 450 mm und einer Bornitridbeschichtung mit einer Dicke von ca. 0,1 mm die Zylinderringscheiben aufgelegt wurden, der Leerraum in der Mitte des Zylinderrings mit Silicium-Granulat (Durchmesserbereich ca. 0,5 mm bis 4 mm) aufgefüllt wurde, und diese Anordnung in einem evakuierten Induktionsofen auf 1600 °C während einer Zeit von ca. 4,2 Minuten erhitzt wurde; die Temperatur wurde weitere zwei Minuten gehalten.

Die unterschiedlich behandelten Formkörper wurden abgekühlt, sie waren nach der gewählten Zeit vollständig siliciert, d. h. der restliche Massenanteil an Matrix-Kohlenstoff in der Probe betrug weniger als 7 %.

An diesen Formkörpern wurde anschließend der Anteil an Kohlenstoffasern bestimmt, die bei der Infiltration mit Silicium nicht angegriffen wurden. Dabei ergab sich als Mittelwert über die untersuchten Formkörper:

| | a) Dochtverfahren | b) erfindungsgemäß |
|---|---|---|
| Formkörper gemäß Beispiel 1 | 95,1 % | 96,4 % |
| Formkörper gemäß Beispiel 2 | 52,0 % | 95,3 % |

### Bezugszeichenliste

- 1: zylinderringförmiger poröser Kohlenstoffkörper
- 1': zylinderringförmiger Teil des porösen Kohlenstoffkörpers 5
- 2: Unterlage
- 3: Hohlraum als Reservoir
- 3': nach oben offene Ausnehmung als Reservoir
- 4: Bornitridschicht
- 5: poröser Körper aus Kohlenstoff
- 6: Silicium
- 7: Mantelfläche
- 8: Deckfläche
- 9: Ausnehmung mit kreisförmigem Querschnitt

## Patentansprüche

1. verfahren zur Herstellung von Körpern aus keramischen Werkstoffen auf Basis von Siliciumcarbid, umfassend die Schritte
- Anordnen von mit Fasern verstärkten porösen Körpern (1, 5) aus Kohlenstoff auf einer gegenüber flüssigem Silicium inerten Unterlage (2), wobei die Körper von außen zugängliche Hohlräume (3) oder oberflächliche Ausnehmungen (3') aufweisen, und wobei die Hohlräume (3) in den porösen Körpern nach unten hin verschlossen sind oder die oberflächlichen Ausnehmungen (3') mit der Unterlage (2) ein nach unten hin abgeschlossenes Reservoir bilden,
- mindestens einmaliges Befüllen des Reservoirs mit Silicium,
- Erwärmen der Anordnung durch Eintrag von Energie zum Aufschmelzen des in dem Reservoir befindlichen Silicium (6)
- Infiltrieren des geschmolzenen Siliciums in die Körper (1,5) und Reaktion des Silicium mit dem Kohlenstoff zu Siliciumcarbid.

2. Verfahren nach Anspruch 1, **dadurch gekennzeichnet, daß** die Anordnung durch induktive Aufheizung erwärmt wird.

3. Verfahren nach Anspruch 1, **dadurch gekennzeichnet, daß** die Anordnung durch Strahlungsheizung erwärmt wird.

4. Verfahren nach Anspruch 1, **dadurch gekennzeichnet, daß** die Unterlage (2) aus Graphit oder einer Graphitfolie besteht.

5. Verfahren nach Anspruch 1, **dadurch gekennzeichnet, daß** auf der Unterlage (2) eine Schicht (4) aus Bornitrid aufgebracht ist.

6. Verfahren nach Anspruch 1, **dadurch gekennzeichnet, daß** der poröse Körper (5) aus Kohlenstoff die Gestalt einer Mantelschicht eines Kegelstumpfs (7) mit einer an die Außenseite der Basis angesetzten zylinderringförmigen Scheibe (1') und einer Deckscheibe (8) mit einer mittigen Ausnehmung (9) in Form eines Hohlzylinders hat.

## Claims

1. Method for producing bodies made from ceramic materials based on silicon carbide, comprising the steps:
- arranging fibre-reinforced porous bodies (1, 5) made from carbon on a substrate (2) that is inert with respect to liquid silicon, wherein the bodies have cavities (3) that are accessible from outside or else surface recesses (3'), and wherein the cavities (3) in the porous bodies are closed at the bottom or the surface recesses (3') together with the substrate (2) form a reservoir that is closed at the bottom,
- filling the reservoir at least once with silicon,
- heating the arrangement by applying energy in order to melt the silicon (6) located in the reservoir,
- causing the molten silicon to infiltrate into the bodies (1, 5) and reacting the silicon with the carbon to form silicon carbide.

2. Method according to claim 1, **characterised in that** the arrangement is heated by inductive heating.

3. Method according to claim 1, **characterised in that** the arrangement is heated by radiant heating.

4. Method according to claim 1, **characterised in that** the substrate (2) consists of graphite or a graphite film.

5. Method according to claim 1, **characterised in that** a layer (4) of boron nitride is applied to the substrate (2).

6. Method according to claim 1, **characterised in that** the porous body (5) made from carbon has the shape of a jacket layer of a truncated cone (7) with an annular cylindrical disc (1') attached to the outer side of the base and a top disc (8) having a central recess (9) in the form of a hollow cylinder.

## Revendications

1. Procédé de réalisation de corps en matériaux céramiques à base de carbure de silicium, comportant les étapes :
- agencement des corps (1, 5) poreux en carbone, renforcés par des fibres, sur un substrat (2) inerte par rapport au silicium liquide, lesdits corps comportant des cavités (3) accessibles de l'extérieur ou des évidements (3') superficiels, et lesdites cavités (3) dans les corps poreux étant fermées par le bas ou lesdits évidements (3') superficiels formant avec le substrat (2) un réservoir fermé vers le bas,
- au moins un remplissage unique du réservoir avec le silicium,
- chauffage de l'agencement par une admission d'énergie pour la mise en fusion du silicium (6) contenu dans le réservoir,
- infiltration du silicium fondu dans les corps (1, 5) et réaction du silicium avec le carbone pour former du carbure de silicium.

2. Procédé selon la revendication 1, **caractérisé en ce que** l'agencement est chauffé par un chauffage inductif.

3. Procédé selon la revendication 1, **caractérisé en ce que** l'agencement est chauffé par un chauffage par rayonnement.

4. Procédé selon la revendication 1, **caractérisé en ce que** le substrat (2) est réalisé en graphite ou dans une feuille de graphite.

5. Procédé selon la revendication 1, **caractérisé en ce qu'**une couche (4) de nitrure de bore est déposée sur le substrat (2).

6. Procédé selon la revendication 1, **caractérisé en ce que** le corps (5) poreux en carbone a la forme d'une couche d'enveloppe d'un cône tronqué (7) avec une plaque (1') annulaire cylindrique, attachée à la face extérieure de la base, et une plaque de recouvrement (8) avec un évidement (9) central en forme de cylindre creux.
